# EUROPÄISCHE PATENTANMELDUNG

(11) **EP 3 875 220 A1**
(43) Veröffentlichungstag der Anmeldung: **08.09.2021**
(21) Anmeldenummer: 21160141.4
(22) Anmeldetag: 02.03.2021
(51) Int. Cl.: B24C 3/32, B24C 11/00, H01M 4/1395

(54) **VERFAHREN ZUR OBERFLÄCHENBEHANDLUNG VON METALL-SUBSTRATEN UND METALLLEGIERUNGS-SUBSTRATEN FÜR EINE NEGATIVE ELEKTRODE EINES SEKUNDÄREN GALVANISCHEN ELEMENTS**

(30) Priorität: 04.03.2020 DE 102020202754
(71) Anmelder: FRAUNHOFER-GESELLSCHAFT zur Förderung der angewandten Forschung e.V., 80686 München (DE)
(72) Erfinder: LORRMANN, Dr. Henning, 97082 Würzburg (DE); WOLF, Andreas J., 97082 Würzburg (DE); FLEGLER, Andreas, 97082 Würzburg (DE); WOLF, Andreas, 97082 Würzburg (DE)
(74) Vertreter: Pfenning, Meinig & Partner mbB

(57) **Zusammenfassung**

Die vorliegende Erfindung betrifft ein Verfahren zur Oberflächenbehandlung von Metall-Substraten und Metalllegierungs-Substraten für eine negative Elektrode eines sekundären galvanischen Elements. Bei dem Verfahren wird mindestens eine zu behandelnde Oberfläche mindestens eines Substrats aus einem Material ausgewählt aus der Gruppe bestehend aus Alkalimetallen, Erdalkalimetallen, Aluminium und Legierungen hiervon mit einem Strahlmittel bestrahlt. Hierbei wird das Strahlmittel in Richtung der zu behandelnden Oberfläche beschleunigt und prallt auf die zu behandelnde Oberfläche auf. Durch das Aufprallen des Strahlmittels auf die zu behandelnde Oberfläche wird zumindest ein Teil der zu behandelnden Oberfläche abgetragen. Auf diese Weise kann eine Reinigung und/oder Strukturierung der Oberfläche erreicht werden. Im Weiteren betrifft die vorliegende Erfindung auch ein Metall-Substrat oder Metalllegierungs-Substrat mit mindestens einer behandelten Oberfläche, welche mit dem erfindungsgemäßen Verfahren behandelt wurde, sowie ein sekundäres galvanisches Element, welches ein solches Metall-Substrat oder Metalllegierungs-Substrat umfasst.

## Beschreibung

Die vorliegende Erfindung betrifft ein Verfahren zur Oberflächenbehandlung von Metall-Substraten und Metalllegierungs-Substraten für eine negative Elektrode eines sekundären galvanischen Elements. Bei dem Verfahren wird mindestens eine zu behandelnde Oberfläche mindestens eines Substrats aus einem Material ausgewählt aus der Gruppe bestehend aus Alkalimetallen, Erdalkalimetallen, Aluminium und Legierungen hiervon mit einem Strahlmittel bestrahlt. Hierbei wird das Strahlmittel in Richtung der zu behandelnden Oberfläche beschleunigt und prallt auf die zu behandelnde Oberfläche auf. Durch das Aufprallen des Strahlmittels auf die zu behandelnde Oberfläche wird zumindest ein Teil der zu behandelnden Oberfläche abgetragen. Auf diese Weise kann eine Reinigung und/oder Strukturierung der Oberfläche erreicht werden. Im Weiteren betrifft die vorliegende Erfindung auch ein Metall-Substrat oder Metalllegierungs-Substrat mit mindestens einer behandelten Oberfläche, welche mit dem erfindungsgemäßen Verfahren behandelt wurde, sowie ein sekundäres galvanisches Element, welches ein solches Metall-Substrat oder Metalllegierungs-Substrat umfasst.

Die höchste Energiedichte in einer Batterie lässt sich durch den Einsatz von einem Anodenmaterial mit sehr geringem Standard-Elektrodenpotential und einer Hochspannungs-Kathode erzielen. Diese Aspekte machen metallisches Lithium mit einem Standard-Elektrodenpotential von -3.040 V gegen die Standard Wasserstoffelektrode und einer spezifischen Ladungsdichte von 3860 mAh/g zu einem vielversprechenden Anodenmaterial für sekundäre galvanische Elemente. Lithium bildet selbst in einer wasserfreien trockenen Atmosphäre oberflächliche Spezies wie LiOH, Li₂CO₃, Li₂O und Li₃N aus. Abhängig von der Atmosphäre während Herstellung und Lagerung kann eine dichte Passivierungsschicht auf der Lithium-Oberfläche vorhanden sein. Diese Oberflächenfunktionalitäten sind hinderlich für die Abscheidung und Auflösung der Li⁺-Ionen während des Ladens und Entladens und erhöhen den Innenwiderstand der Batterie. Da Zusammensetzung und Filmdicke der oberflächlichen Schicht schwer kontrollierbar ist, lassen sich die Auswirkungen in der späteren Anwendung kaum abschätzen. Um eine bessere Batterie-Performance zu gewährleisten, ist eine Reinigung der Lithium-Oberfläche in möglichst reiner Argon-Atmosphäre direkt vor Einbau in die Batteriezelle zweckmäßig.

Des Weiteren kann eine gezielte morphologische Strukturierung der Lithium-Oberfläche für die beim Laden und Entladen ablaufenden Abscheidungs- und Auflösungsprozesse der Li⁺-Ionen vorteilig sein.

Um eine hohe Zyklenstabilität von Batterien zu gewährleisten, ist - abhängig vom verwendeten Elektrolyt - eine Passivierung der Lithium-Anode zweckmäßig. Diverse in- und ex-situ Verfahren existieren bereits, mit dem Ziel, derartige Passivierungsschichten aufzubringen.

Bekannte Reinigungsverfahren von Lithium-Oberflächen sind chemische Ätzverfahren mit verschiedenen Lösemitteln. Hierbei ist ein hoher Lösemittelverbrauch zu beanstanden. Außerdem bedarf es weiterer Reinigungsschritte, um die Lösemittelrückstände auf der Lithium-Oberfläche zu entfernen. Diese und weitere Nachteile sorgen dafür, dass existierende chemische Reinigungsmethoden für diese spezifische Anwendung nicht überzeugen.

Alternativ wurde vorgeschlagen den existierenden nativen Film chemisch umzusetzen und durch einen anderen chemischen Film zu ersetzten (siehe N.-W. Li, Y.-X. Yin, C.-P. Yang, Y.-G. Guo, Advanced materials (Deerfield Beach, Fla.), 2016, 28 (9), 1853-1858).

Weitere aufwendige Verfahren um Metalloberflächen insbesondere von Oxiden zu befreien beruhen auf reduzierenden Plasmaatmosphären und elektrochemischem Polieren (siehe z.B. DE 10 2008 002 079 A1). Um auf nasschemische Prozessschritte zu verzichten, können physikalische Reinigungsmethoden verwendet werden. In Zusammenhang mit metallischem Lithium werden mechanische Reinigungsmethoden als Teil eines Recycling Prozesses von Lithium beispielsweise in CN 109852802 A erwähnt.

Ryou et al. (M.-H. Ryou, Y. M. Lee, Y. Lee, M. Winter, P. Bieder, Adv. Funct. Mater., 2015, 25 (6), 834-841) zeigen wie ein Mikro-Nadel-Imprint zu verbesserter Zyklenstabilität und erhöhter Entladekapazität bei höheren C-Raten führt. Es ist bekannt, dass Lithium-Pulver sehr gut als Anode fungieren können und bestimmte Vorteile gegenüber Lithium-Folie auf eine größere Oberfläche der Pulver zurückzuführen ist (siehe J. Heine, S. Krüger, C. Hartnig, U. Wietelmann, M. Winter, P. Bieker, Adv. Energy Mater., 2014, 4 (5), 1300815).

Ausgehend hiervon war es die Aufgabe der vorliegenden Erfindung ein Verfahren zur Oberflächenbehandlung von Metall-Substraten und Metalllegierungs-Substraten für eine negative Elektrode eines sekundären galvanischen Elements anzugeben, mit welchem Metall-Substrate und Metalllegierungs-Substrate für negative Elektroden von sekundären galvanischen Elementen erhalten werden können, die zu einer höheren Lade- und Entlade-Effizienz des sekundären galvanischen Elements führen.

Diese Aufgabe wird bezüglich eines Verfahrens zur Oberflächenbehandlung von Metall-Substraten und Metalllegierungs-Substraten für eine negative Elektrode eines sekundären galvanischen Elements mit den Merkmalen des Patentanspruchs 1, bezüglich eines Metallsubstrats bzw. Metalllegierungs-Substrats mit den Merkmalen des Patentanspruchs 13 und bezüglich eines sekundären galvanischen Elements mit den Merkmalen des Patentanspruchs 15 gelöst. Die jeweilig abhängigen Patentansprüche stellen dabei vorteilhafte Weiterbildungen dar.

Erfindungsgemäß wird somit ein Verfahren zur Oberflächenbehandlung von Metall-Substraten und/oder Metalllegierungs-Substraten für eine negative Elektrode (vorzugsweise eine Anode) eines sekundären galvanischen Elements angegeben, bei welchem mindestens eine zu behandelnde Oberfläche mindestens eines Substrats aus einem Material ausgewählt aus der Gruppe bestehend aus Alkalimetallen, Erdalkalimetallen, Aluminium und Legierungen bzw. Mischungen hiervon mit einem Strahlmittel bestrahlt wird, wobei das Strahlmittel in Richtung der zu behandelnden Oberfläche beschleunigt wird und auf die zu behandelnde Oberfläche aufprallt, und wobei durch das Aufprallen des Strahlmittels auf die zu behandelnde Oberfläche zumindest ein Teil der zu behandelnden Oberfläche abgetragen wird.

Im erfindungsgemäßen Verfahren wird mindestens eine zu behandelnde Oberfläche mindestens eines Metall-Substrats und/oder Metalllegierungs-Substrats mit einem Strahlmittel bestrahlt. Diese Art von Behandlung kann auch als Sandstrahlen bezeichnet werden. Bei dem mindestens einen Substrat handelt es sich um mindestens ein Substrat aus einem Material ausgewählt aus der Gruppe bestehend aus Alkalimetallen, Erdalkalimetallen, Aluminium und Legierungen bzw. Mischungen hiervon. Beispielsweise kann es sich beim dem mindestens einen Substrat um mindestens ein Metall-Substrat handeln, welches ausgewählt ist aus der Gruppe bestehend aus Alkalimetall-Substraten, Erdalkalimetall-Substraten, Aluminium-Substraten und Kombinationen hiervon. Bei dem mindestens einen Substrat kann es sich z.B. aber auch um mindestens ein Metalllegierungs-Substrat handeln, dessen Material eine Legierung aus Metallen ausgewählt aus der Gruppe bestehend aus Alkalimetallen, Erdalkalimetallen und Aluminium ist. Vorzugsweise handelt es sich bei dem mindestens einen Metall-Substrat um mindestens ein Alkalimetall-Substrat, besonders bevorzugt um mindestens ein Lithium-Substrat. Unter Lithium wird hierbei metallisches Lithium verstanden. Vorzugsweise handelt es sich bei dem mindestens einen Substrat um eine negative Elektrode, besonders bevorzugt um eine Anode, für ein sekundäres galvanisches Element.

Beispielsweise kann die gesamte Oberfläche des mindestens einen Substrats mit einem Strahlmittel bestrahlt wird.

Beim Bestrahlen des Substrats mit dem Strahlmittel wird das Strahlmittel in Richtung der zu behandelnden Oberfläche beschleunigt und prallt dann auf die zu behandelnde Oberfläche auf. Das Beschleunigen erfolgt vorzugsweise mittels Gasdruck. Beispielsweise wird mittels Druckluft ein starker Luftstrahl erzeugt, der das Strahlmittel aus einem Sammelbehälter mitnimmt und beschleunigt, wobei das Strahlmittel dann zusammen mit dem Luftstrahl mit hoher Geschwindigkeit auf die zu behandelnde Oberfläche trifft.

Durch das Aufprallen des Strahlmittels auf die zu behandelnde Oberfläche wird zumindest ein Teil der zu behandelnden Oberfläche abgetragen. Hierdurch kann eine Reinigung und/oder Strukturierung der zu behandelnden Oberfläche erreicht werden.

Beispielsweise können durch das Abtragen eines Teils der zu behandelnden Oberfläche bestimmte Verunreinigungen (im Falle eines Lithium-Substrats z.B. LiOH, Li₂CO₃, Li₂O und/oder Li₃N) entfernt werden. Durch die Entfernung solcher Verunreinigungen, wie z.B. oberflächlicher Spezies oder Passivierungsschichten, kann eine sehr hohe Reinheit des behandelten Substrats erreicht werden. Hieraus resultiert ein geringer Innenwiderstand des sekundären galvanischen Elements, was wiederum zu einer höheren Lade- und Entlade-Effizienz des sekundären galvanischen Elements führt. Zudem führt die Abwesenheit von Verunreinigungen auf der Oberfläche des als negative Elektrode dienenden Metall-Substrats bzw. Metalllegierungs-Substrats zu einer verbesserten Zyklenstabilität des sekundären galvanischen Elements (d.h. zu einer längeren Lebendauer des sekundären galvanischen Elements).

Im Weiteren kann durch das das Abtragen eines Teils der zu behandelnden Oberfläche beispielsweise auch eine Oberflächenstruktur (z.B. im Mikrometerbereich) auf der Oberfläche erzeugt werden, wodurch die Oberfläche des Metall-Substrats bzw. Metalllegierungs-Substrats in Relation zur makroskopischen Fläche der negativen Elektrode vergrößert wird. Auch hieraus resultiert eine höhere Lade- und Entlade-Effizienz des sekundären galvanischen Elements.

In der Folge können durch das erfindungsgemäße Verfahren Metall-Substrate und Metalllegierungs-Substrate für negative Elektroden von sekundären galvanischen Elementen erhalten werden, die zu einer höheren Lade- und Entlade-Effizienz des sekundären galvanischen Elements führen.

Ein weiterer Vorteil des erfindungsgemäßen Verfahrens ist, dass keine Chemikalien (z.B. spezielle Chemikalien zur Reinigung) verwendet werden müssen. Zudem kann das erfindungsgemäße Verfahren in einen kontinuierlichen Rolle-zu-Rolle Prozess eingebunden werden. Im Weiteren sind mit dem erfindungsgemäßen Verfahren eine Reinigung sowie eine Strukturierung der Oberfläche des Metall-Substrats bzw. Metalllegierungs-Substrats in einem einzelnen Prozessschritt möglich.

Vorzugsweise erfolgt im Anschluss an das Bestrahlen der zu behandelnden Oberfläche ein Zusammenfügen des Substrats mit mindestens einer weiteren Komponente, vorzugsweise mit mehreren weiteren Komponenten, des sekundären galvanischen Elements. Besonders bevorzugt erfolgt im Anschluss an das Bestrahlen der zu behandelnden Oberfläche ein Zusammenfügen des Substrats mit mehreren weiteren Komponenten zu einem sekundären galvanischen Element.

Eine bevorzugte Variante des erfindungsgemäßen Verfahrens zeichnet sich dadurch aus, dass durch das Abtragen des zumindest einen Teils der zu behandelnden Oberfläche eine Reinigung der zu behandelnden Oberfläche und/oder eine Strukturierung der zu behandelnden Oberfläche erfolgt.

Vorzugsweise umfasst das Strahlmittel Partikel oder besteht daraus. Die Partikel haben vorzugsweise einen mittleren Partikeldurchmesser von 1 um bis 2 mm. Der mittlere Partikeldurchmesser kann beispielsweise mittels Laser-Beugung (gemäß ISO 13320) bestimmt werden.

Gemäß einer weiteren bevorzugten Variante des erfindungsgemäßen Verfahrens umfasst das Strahlmittel Partikel mit einer im Wesentlichen glatten Oberfläche und/oder einer im Wesentlichen runden Morphologie bzw. Form oder besteht hieraus. Die Form bzw. Morphologie und/oder die Beschaffenheit der Oberfläche kann beispielsweise mit einem Lichtmikroskop bestimmt werden. Die Partikel können beispielsweise ausgewählt sein aus der Gruppe bestehend aus Glasperlen, Metallpartikeln, amorphen Festkörperpartikeln, anorganischen Festkörperpartikeln und Mischungen hiervon.

Durch die Verwendung von Partikeln mit einer im Wesentlichen glatten Oberfläche und einer im Wesentlichen runden Morphologie (wie z.B. Glasperlen) als Strahlmittel kann erreicht werden, dass ein Großteil der Partikel oder vorzugsweise sogar alle der Partikel beim Aufprallen auf die zu behandelnde Oberfläche nicht auf der Oberfläche verbleiben. Die Verwendung solcher Partikel ist daher besonders für die Reinigung des Substrats von Vorteil.

Die Partikel des Strahlmittels können beispielsweise auch eine Härte von 2 bis 10 Mohs, bevorzugt von 6 bis 8 Mohs, aufweisen. Die Härte kann dabei beispielweise bestimmt werden mit einer Materialprüfmaschine oder einem Nanoindenter.

Eine weitere bevorzugte Variante des erfindungsgemäßen Verfahrens ist dadurch gekennzeichnet, dass das Strahlmittel inerte Partikel umfasst oder aus diesen besteht, wobei die inerten Partikel vorzugsweise ausgewählt sind aus der Gruppe bestehend aus Korund-Partikeln, Glasperlen, Keramik-Perlen, Edelstahlgussperlen, und Mischungen hiervon. Die Verwendung von inerten Partikeln ist besonders vorteilhaft, da bei diesen keine chemische Wechselwirkung oder Reaktion mit der Oberfläche des Substrats auftritt. Bei der Verwendung von inerten Partikeln kann die Oberflächenbehandlung auch insbesondere dazu verwendet werden, eine (aus den inerten Partikeln bestehende) Funktionsschicht auf die zu behandelnde Oberfläche aufzutragen, beispielsweise eine Schicht, die als Abstandshalter eine physikalische Barrierewirkung zeigt. Um zu erreichen, dass die Partikel größtenteils auf der Oberfläche verbleiben, kann das Strahlmittel Partikel umfassen oder daraus bestehen, die eine die eine kantige Morphologie bzw. Form aufweisen. Desweiteren können die Strahlbedingungen (Winkel, Gasdruck) für ein Verbleiben auf der Oberfläche angepasst werden.

Die Partikel, die als Strahlmittel verwendet werden können, können verschiedenste Eigenschaften bezüglich Form, Dichte, Härte, Morphologie, Größe und chemischer Zusammensetzung besitzen. Eine bevorzugte Voraussetzung für die Verwendung als Strahlmittel ist, dass die Partikel während der Beschleunigung nicht fragmentieren und bezüglich ihrer physikalischen Eigenschaften als ballistische Objekte dienen, welche beim Auftreffen auf die Oberfläche zur Abtragung der oberflächlichen Materialschichten des beschossenen Materials führen.

Gemäß einer weiteren bevorzugten Variante des erfindungsgemäßen Verfahrens umfasst das Strahlmittel Funktionspartikel oder besteht daraus, wobei die Funktionspartikel jeweils einen Kern und eine um den Kern angeordnete Hülle, welche ein Funktionsmaterial umfasst, aufweisen. Durch das Aufprallen des Strahlmittels auf die zu behandelnde Oberfläche wird zumindest ein Teil des Funktionsmaterials auf die zu behandelnde Oberfläche aufgetragen, wobei der zumindest eine Teil des Funktionsmaterials vorzugsweise als Schicht, besonders bevorzugt als Passivierungsschicht, auf die zu behandelnde Oberfläche aufgetragen wird. Auf diese Weise kann eine Funktionalisierung der Oberfläche erreicht werden.

Vorzugsweise kann mit dem erfindungsgemäßen Verfahren somit in einem Prozessschritt eine Reinigung und/oder eine Strukturierung und/oder eine Funktionalisierung der zu behandelnden Oberfläche erreicht werden.

Vorzugsweise umfasst das Funktionsmaterial Nanopartikel. Unter Nanopartikeln werden dabei Partikel mit einem mittleren Partikeldurchmesser von 0,1 nm bis 1000 nm, vorzugsweise von 1 nm bis 100 nm, verstanden.

Die Methodik, durch Beschuss einer Oberfläche eine Funktionalisierung zu hinterlassen, beruht auf der Verwendung von Core-Shell-Partikeln, bei denen beispielsweise der Kern mit eingestellter Größe und Dichte als ballistischer Träger einer Oberflächenschicht aus Nanopartikeln fungiert. Das Trägerpartikel verlässt bei korrekt gewählten Prozessparametern die bestrahlte Oberfläche nach Einschlag und lässt dabei die Nanopartikel auf der Oberfläche zurück.

Neben Impuls und Flugbahn ist die Partikelform maßgeblich bestimmend für den Verbleib des Strahlmittels auf der Oberfläche. Für die Anwendung als Reinigungsschritt ist es vorteilhaft, wenn sehr wenig bis keine Partikel des Strahlmittels auf der Oberfläche verbleiben. Für andere Einsatzmöglichkeiten des Verfahrens, wie etwa die Aufbringung von inerten Partikeln, die als Abstandshalter eine physikalische Barrierewirkung zeigen, ist es vorteilhaft, wenn die Partikel des Strahlmittels auf der Oberfläche verbleiben. Alle Kombinationen von inerten Partikeln, Funktionspartikeln oder kompletter Entfernung der Partikel sind möglich und über Partikeleigenschaften und Prozessparameter einstellbar.

Weiterhin ist es bevorzugt, dass das Strahlmittel in Richtung der zu behandelnden Oberfläche mithilfe von Gasdruck beschleunigt wird. Der Gasdruck liegt dabei vorzugsweise in einem Bereich von 0,5 bar bis 20 bar, besonders bevorzugt in einem Bereich von 2 bar bis 10 bar, ganz besonders bevorzugt in einem Bereich von 3 bar bis 5 bar. Durch Verwendung eines solchen Gasdrucks kann erreicht werden, dass möglichst viele Verunreinigungen von der zu behandelnden Oberfläche entfernt werden und dabei möglichst wenige Teile der unter den Verunreinigungen liegenden Metall-Schicht oder Metalllegierungs-Schicht abgetragen werden. Der genaue Gasdruck ist dabei jedoch vom apparativen Aufbau und weiteren Parametern, wie z.B. der Strahlzeit und dem Winkel zwischen der Richtung, in welche das Strahlmittel beschleunigt wird, und der zu behandelnden Oberfläche, abhängig.

Eine weitere bevorzugte Variante des Verfahrens zeichnet sich dadurch aus, dass der Winkel zwischen der Richtung, in welche das Strahlmittel beschleunigt wird, und der zu behandelnden Oberfläche in einem Bereich von 1° bis 45°, bevorzugt in einem Bereich von 2° bis 20°, besonders bevorzugt in einem Bereich von 5° bis 10°, liegt. Durch Verwendung eines solchen Winkels kann erreicht werden, dass möglichst viele Verunreinigungen von der zu behandelnden Oberfläche entfernt werden und dabei möglichst wenige Teile der unter den Verunreinigungen liegenden Metall-Schicht oder Metalllegierungs-Schicht abgetragen werden. Der genaue Winkel ist dabei jedoch vom apparativen Aufbau und von weiteren Parametern, wie z.B. dem Gasdruck und der Strahlzeit abhängig.

Gemäß einer weiteren bevorzugten Variante des Verfahrens wird die zu behandelnde Oberfläche für einen Zeitraum von 0,1 s bis 5 s, bevorzugt für einen Zeitraum von 0,2 s bis 3 s, besonders bevorzugt für einen Zeitraum von 0,5 s bis 1 s, mit dem Strahlmittel bestrahlt. Der Zeitraum der Bestrahlung wird auch als Strahlzeit bezeichnet. Durch Verwendung einer solchen Strahlzeit kann erreicht werden, dass möglichst viele Verunreinigungen von der zu behandelnden Oberfläche entfernt werden und dabei möglichst wenige Teile der unter den Verunreinigungen liegenden Metall-Schicht oder Metalllegierungs-Schicht abgetragen werden. Die genaue Strahlzeit ist dabei jedoch vom apparativen Aufbau und von weiteren Parametern, wie z.B. dem Gasdruck und dem Winkel zwischen der Richtung, in welche das Strahlmittel beschleunigt wird, und der zu behandelnden Oberfläche, abhängig. Sehr kurze Strahlzeiten sind zudem vorteilig für eine oberflächensensitive Behandlung und die Einbringung des Prozesses in einer kontinuierlichen Rolle zu Rolle Fertigung.

Weiterhin ist es bevorzugt, dass das Bestrahlen der zu behandelnden Oberfläche mit dem Strahlmittel in einer Inertgasatmosphäre, vorzugsweise in einer Argon-Atmosphäre, erfolgt und/oder in einer Atmosphäre erfolgt, die einen F₂O-Gehalt aufweist, der kleiner als 5 ppm ist. Da selbst Verunreinigungen von Sauerstoff und Wasser im ppm-Bereich zur Ausbildung von Oberflächenfunktionalitäten auf Lithium führen, sollte der Reinigungsschritt vorzugsweise unter Inertgasatmosphäre oder alternativ unter sehr trockener Atmosphäre stattfinden. Auf diese Weise kann verhindert werden, dass sich bereits während der Oberflächenbehandlung wieder neue Verunreinigungen auf der zu behandelnden Oberfläche des Substrats bilden.

Eine weitere bevorzugte Variante des erfindungsgemäßen Verfahrens ist dadurch gekennzeichnet, dass unmittelbar im Anschluss an das Bestrahlen der zu behandelnden (bzw. der behandelten) Oberfläche
- ein Aufbringen einer Funktionsschicht auf die behandelte Oberfläche erfolgt, wobei die Funktionsschicht vorzugsweise eine Polymerschicht, eine anorganische Schicht oder eine kohlenstoffhaltige Schicht ist, oder
- ein Zusammenfügen, vorzugsweise eine Lamination, des Substrats mit weiteren Komponenten des sekundären galvanischen Elements erfolgt, oder
- eine inerte Versiegelung der behandelten Oberfläche oder des Substrats erfolgt.

Durch eine solche unmittelbar im Anschluss an das Bestrahlen der zu behandelnden (bzw. der behandelten) Oberfläche erfolgende Maßnahme kann verhindert werden, dass sich nach der Reinigung durch die Oberflächenbehandlung wieder neue Verunreinigungen auf der gerade behandelten Oberfläche des Substrats bilden.

Gemäß einer besonders bevorzugten Variante des erfindungsgemäßen Verfahrens ist das Substrat ein Alkalimetall-Substrat, ganz besonders bevorzugt ein Lithium-Substrat. Unter Lithium wird hierbei metallisches Lithium verstanden.

Weiterhin ist es bevorzugt, dass das Substrat
- ein Film ist, welcher auf einer Trägerfolie, vorzugsweise einer polymeren Trägerfolie, angeordnet ist oder welcher auf keiner Trägerfolie angeordnet ist, oder
- eine Schicht eines Laminats aus
   - einem ersten Metall, insbesondere Lithium, oder einer ersten Metalllegierung und
   - mindestens einem weiteren Metall oder einer weiteren Metalllegierung ist,
   wobei die Schicht vorzugsweise eine Lithium-Schicht eines Kupfer-Lithium-Laminats ist, oder
- ein Barren, vorzugsweise ein Lithium-Barren, ist.

Wird ein Metall-Barren oder Metalllegierungs-Barren verwendet, kann dieser im Anschluss an die Oberflächenbehandlung zu einer negativen Elektrode weiterverarbeitet werden, z.B. mittels Extrusion.

Die vorliegende Erfindung betrifft zudem ein Metall-Substrat oder Metalllegierungs-Substrat mit mindestens einer behandelten Oberfläche, welche mit dem erfindungsgemäßen Verfahren behandelt wurde. Aufgrund der Behandlung mit dem erfindungsgemäßen Verfahren weist das erfindungsgemäße Substrat eine besonders hohe Reinheit (d.h. Freiheit von typischen sich an Luft auf der Metall-Oberfläche oder Metalllegierungs-Oberfläche bildenden Ablagerungen) auf, wobei ferner zumindest geringe Mengen des im erfindungsgemäßen Verfahren verwendeten Strahlmittels auf der behandelten Oberfläche des erfindungsgemäßen Metall-Substrats oder Metalllegierungs-Substrats vorhanden sind. In der Folge unterscheidet sich das erfindungsgemäße Substrat aufgrund der Behandlung mit dem erfindungsgemäßen Verfahren von bisher aus dem Stand der Technik bekannten Metall-Substraten und Metalllegierungs-Substraten.

Vorzugsweise ist das Metall-Substrat ein Alkalimetall-Substrat, ganz besonders bevorzugt ein Lithium-Substrat. Unter Lithium wird hierbei metallisches Lithium verstanden.

Eine bevorzugte Ausführungsform des erfindungsgemäßen Metall-Substrats oder Metalllegierungs-Substrats ist dadurch gekennzeichnet, dass auf der behandelten Oberfläche eine Passivierungsschicht angeordnet ist, die vorzugsweise aus einem Material besteht, welches ausgewählt ist aus der Gruppe bestehend aus
- organischen Verbindungen; bevorzugt cyclischen Carbonaten und Polycarbonaten, wie z.B. Fluoroethylencarbonat, Vinylencarbonat, Polyethylencarbonat; Polyethern, wie z.B. Polyethylenoxid; Blockcopolymeren; Silanen;
- anorganischen Verbindungen; bevorzugt Metalloxidverbindungen, Li₃PO₄, LiPON, LiNO₃, Al₂O₃,
- anorganisch-organischen Hybridpolymeren,
- anorganisch-organischen Verbundschichten, und
- Mischungen hiervon.

Im Weiteren betrifft die vorliegende Erfindung auch ein sekundäres galvanisches Element umfassend eine negative Elektrode, eine positive Elektrode und einen Elektrolyten, wobei es sich bei der negativen Elektrode um ein erfindungsgemäßes Metall-Substrat oder Metalllegierungs-Substrat handelt. Vorzugsweise ist das sekundäre galvanische Element eine Lithium-Ionen-Batterie und/oder eine Festkörperbatterie.

Ferner betrifft die vorliegende Erfindung auch ein Verfahren zur Herstellung eines sekundären galvanischen Elements, bei welchem
a) zunächst eine negative Elektrode (vorzugsweise eine Anode) hergestellt wird, indem mindestens eine zu behandelnde Oberfläche mindestens eines Substrats aus einem Material ausgewählt aus der Gruppe bestehend aus Alkalimetallen, Erdalkalimetallen, Aluminium und Legierungen bzw. Mischungen hiervon mit einem Strahlmittel bestrahlt wird, wobei das Strahlmittel in Richtung der zu behandelnden Oberfläche beschleunigt wird und auf die zu behandelnde Oberfläche aufprallt, und wobei durch das Aufprallen des Strahlmittels auf die zu behandelnde Oberfläche zumindest ein Teil der zu behandelnden Oberfläche abgetragen wird, und
b) die in Schritt a) hergestellte negative Elektrode (vorzugsweise Anode) mit mehreren weiteren Komponenten zu einem sekundären galvanischen Element zusammengefügt wird.

Die weiteren Komponenten können dabei beispielsweise ausgewählt sein aus der Gruppe bestehend aus einer positiven Elektrode (vorzugsweise einer Kathode), einem Elektrolyten (vorzugsweise einem Festkörperelektrolyten), Grenzschichten, Strom-Ableitern, und Kombinationen hiervon.

Vorzugsweise erfolgt die Herstellung des sekundären galvanischen Elements mittels eines kontinuierlichen Rolle-zu-Rolle-Prozesses.

Anhand der nachfolgenden Figuren und Beispiele soll die vorliegende Erfindung näher erläutert werden, ohne diese auf die hier gezeigten spezifischen Ausführungsformen und Parameter zu beschränken.

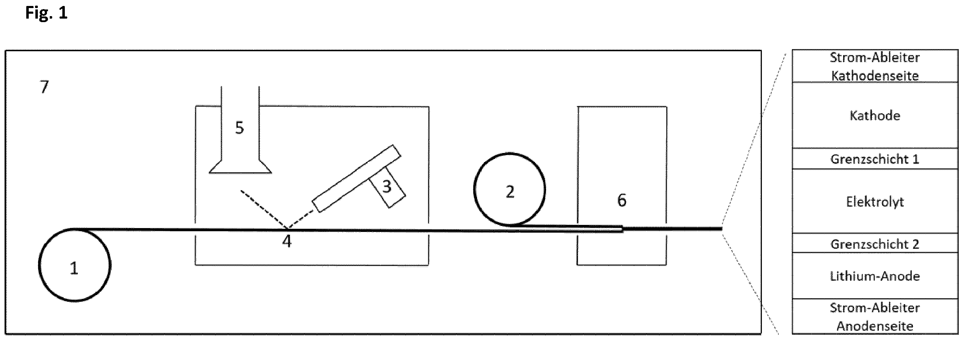

Fig. 1 zeigt eine Skizze einer möglichen Prozesskette zur Batterie-Zellfertigung, bei der das erfindungsgemäße Verfahren zur Oberflächenbehandlung in einer Inertgas-Atmosphäre direkt vor Einbau des Metall-Substrats bzw. Metalllegierungs-Substrats (hier: Lithium-Substrats) in die Zelle der darauffolgenden Versiegelung der Zelle zum Einsatz kommt. Somit zeigt Fig. 1 eine beispielhafte Prozessskizze, wie das erfindungsgemäße Verfahren zur Oberflächenbehandlung in die Zellfertigung eingebunden werden kann. Ein Kupfer-Lithium-Laminat, welches mittels eines Kupfer-Lithium-Laminat-Reservoirs 1 zur Verfügung gestellt wird, wird einer Oberflächenbehandlung 4 mittels Sandstrahlen unterzogen. Hierbei wird Strahlmittel aus einem Strahlmittelreservoir 3 bereitgestellt und in Richtung der zu behandelnden Oberfläche beschleunigt, wobei das Strahlmittel auf die zu behandelnde Oberfläche aufprallt. Durch das Aufprallen des Strahlmittels wird ein Teil der zu behandelnden Oberfläche abgetragen. Auf diese Weise werden eine Reinigung, eine Strukturierung und gegebenenfalls eine Funktionalisierung der Oberfläche erreicht. Die von der Oberfläche abgetragenen Teile bzw. Verunreinigungen sowie nicht auf der Oberfläche verbleibendes Strahlmittel werden mittels einer Absaugung 5 abgesaugt. Im direkten Anschluss an die Oberflächenbehandlung 4 wird das Kupfer-Lithium-Laminat mit den restlichen Zellbestandteilen zusammengebracht um eine fertige Zelle zu bilden, die vereinfacht aus Strom-Ableiter der Kathode, Kathode, erster Grenzschicht, Elektrolyt, zweiter Grenzschicht, Lithium-Anode und Strom-Ableiter der Anode besteht. Das Zusammenbringen wird hierbei durch ein Fügeverfahren 6 (z.B. Kalandrieren) erreicht. Die Kathode und der Elektrolyt werden mittels eines Kathoden-Elektrolyt-Reservoirs 2 zur Verfügung gestellt. Der gesamte Prozess wird in einer Inertgas-Atmosphäre 7 (z.B. in einer Argon-Glovbox) durchgeführt. Alternativ zum Kupfer-Lithium-Laminat kann z.B. auch ein Lithium-Film auf einer polymeren Trägerfolie oder ein reiner Lithium-Film (ohne Trägerfolie) verwendet werden.

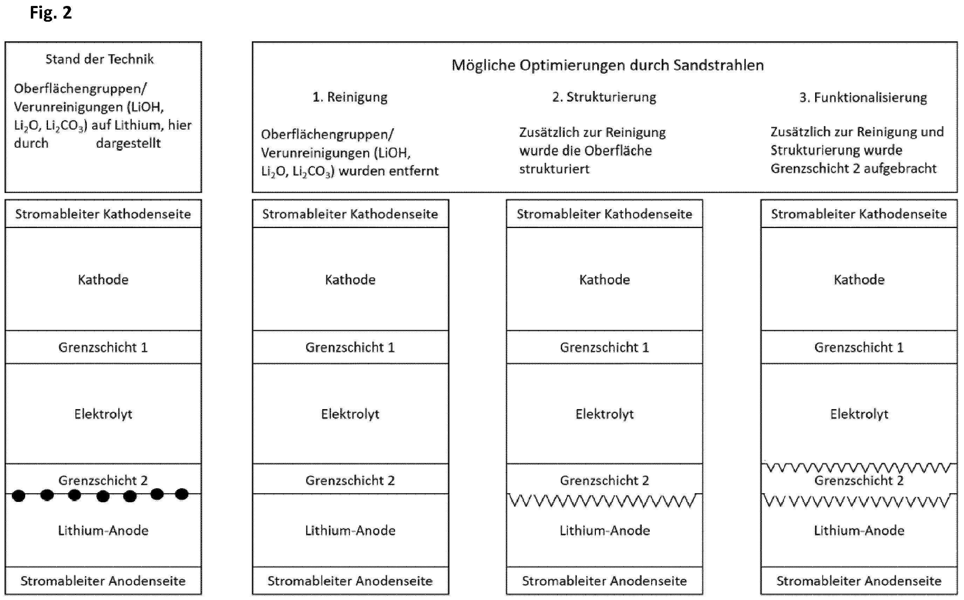

Fig. 2 zeigt eine schematische Darstellung qualitativer Unterschiede im Aufbau von Batterie-Zellen, deren Anoden gemäß der vorliegenden Erfindung durch Reinigung, Strukturierung und/oder Funktionalisierung mittels Sandstrahlen erzeugt werden können im Vergleich zu einer Batterie-Zelle aus dem Stand der Technik, deren Anode nicht mit dem erfindungsgemäßen Verfahren behandelt wurde. Fig. 2 fasst somit die Optimierungsmöglichkeiten von Lithium-Ionen-Batterien mit Lithium-Anode zusammen, die unter Verwendung des erfindungsgemäßen Verfahrens zur Oberflächenbehandlung erzeugt werden können.

Die Reinigung bewirkt, dass die gesamte Lithium-Oberfläche für das Stripping und Plating von Li⁺-Ionen zur Verfügung steht und der innere Widerstand der Zelle geringer ist als mit Verunreinigungen.

Die Strukturierung bewirkt eine größere Oberfläche der Anode und kann sich positiv auf die morphologische Entwicklung der Anodenoberfläche über die Zeit, beziehungsweise viele Lade- und Entladezyklen auswirken und womöglich Dendritenwachstum vorbeugen oder abschwächen.

Die Aufbringung einer Passivierungsschicht parallel zur Reinigung wirkt präventiv gegen weitere Verschmutzungen der Lithium-Oberfläche und spart den Arbeitsschritt der Aufbringung einer ex-situ Passivierungsschicht auf dem Elektrolyten oder der Lithium-Anode durch einen eigenen Prozessschritt.

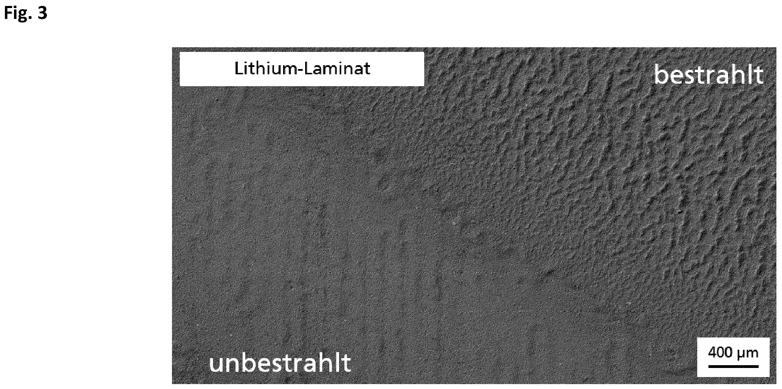

Fig. 3 zeigt eine Laser-Scanning-Mikroskop-Aufnahme (LSM-Aufnahme) eines mit dem erfindungsgemäßen Verfahren zur Oberflächenbehandlungen behandelten Lithium-Laminats mit sichtbarem Übergang zwischen einem mit Edelkorund bestrahltem Bereich und einem unbestrahlten Bereich. Der Übergang zwischen unbestrahlter Oberfläche unten links und bestrahlter Oberfläche oben rechts ist eindeutig durch die Veränderung der Oberflächenstruktur sichtbar. Die Oberfläche wurde hierbei für 3 s bestrahlt, wobei Edelkorund-Partikel als Strahlmittel verwendet wurden. Der Argonstrom wurde mit einem Druck von 5 bar zugeführt und der Strahl mit einem Winkel von 10° auf die Oberfläche fokussiert.

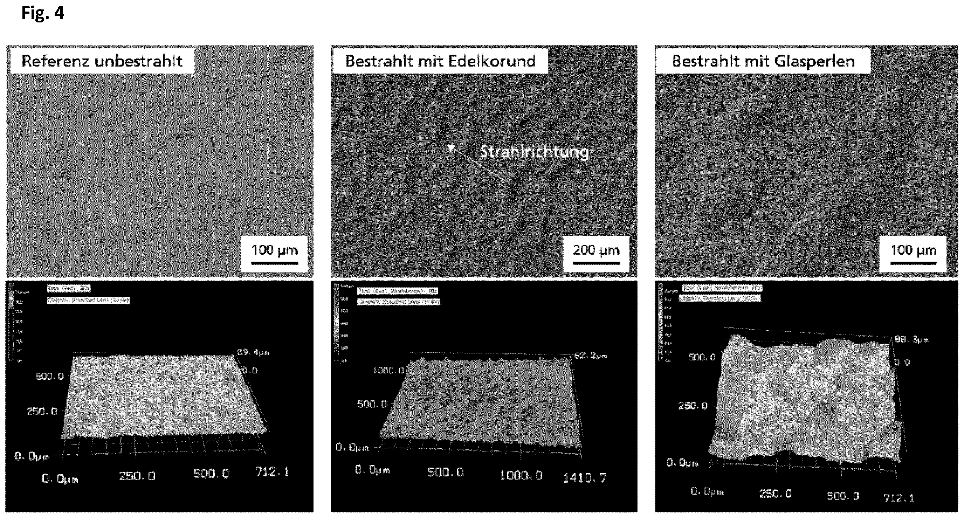

Fig. 4 zeigt ebenfalls LSM-Aufnahmen der Oberfläche eines Lithium-Laminats. Hierbei ist ein Vergleich der Topographien einer unbestrahlten Referenz (linke Abbildungen), einer mit Edelkorund-Partikeln bestrahlten Oberfläche (mittlere Abbildungen) und einer mit Glasperlen bestrahlten Oberfläche (rechte Abbildungen) dargestellt. Fig. 4 zeigt, dass - unabhängig davon, ob mit Edelkorund oder mit Glasperlen gestrahlt wurde - sich eine Wellenstruktur ergab, bei der sich die Wellenkämme senkrecht zur Strahlrichtung ausbildeten. Bei den Strahlmitteln handelte es sich um die kommerziell im Großmaßstab erhältlichen Strahlmittel MKE Edelkorund weiß F600 3-19 µm (Würth) und MGL Glasperlen 0-50 µm (Würth). Die Wellentäler und -berge, die sich ergaben, sind bis zu mehrere 10 µm tief. Da die Lithium-Schicht eine Dicke von etwa 50 µm besitzt, wurde nach 6-10 s des Strahlens auf den gleichen Oberflächenbereich alles Lithium abgetragen und der Kupfer-Strom-Ableiter wurde sichtbar. Einstrahlwinkel und Strahldruck können Einfluss auf die Abtragungsgeschwindigkeit haben.

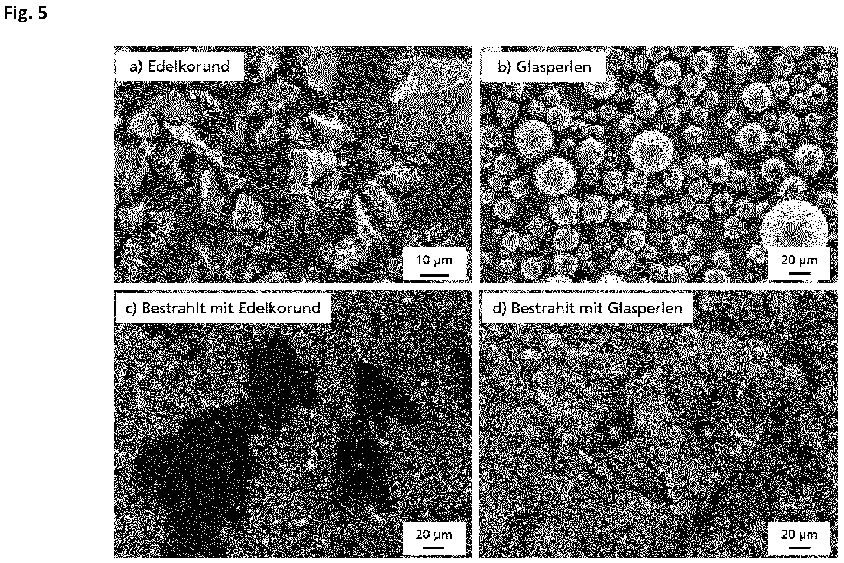

Fig. 5 zeigt in den Abbildungen a) und b) REM-Aufnahmen der Strahlmittel Edelkorund und Glasperlen. Zudem zeigt Fig. 5 in den Abbildungen c) und d) LSM-Aufnahmen der Oberfläche eines mit Edelkorund bzw. Glasperlen bestrahlten Lithium-Laminats mit Identifikation von darauf verbliebenem Strahlmittel. Die Darstellungen in Fig. 5 machen den Einfluss der Morphologie des Strahlmittels auf den Verbleib auf der Oberfläche des Lithium-Laminats deutlich. Im Fall der scharfkantigen Korund-Partikel ist die Lithium-Oberfläche stark von Strahlmittel bedeckt, während im Fall der Glasperlen nur durch gezielte Suche vereinzelte Perlen zu finden waren. Der geringe Verbleib von Strahlmittel im Fall der Glasperlen auf der Lithium-Oberfläche wurde in Anbetracht der duktilen Eigenschaften von reinem Lithium als überraschend positiv eingestuft und war bei den frei gewählten Strahlbedingungen so nicht zu erwarten.

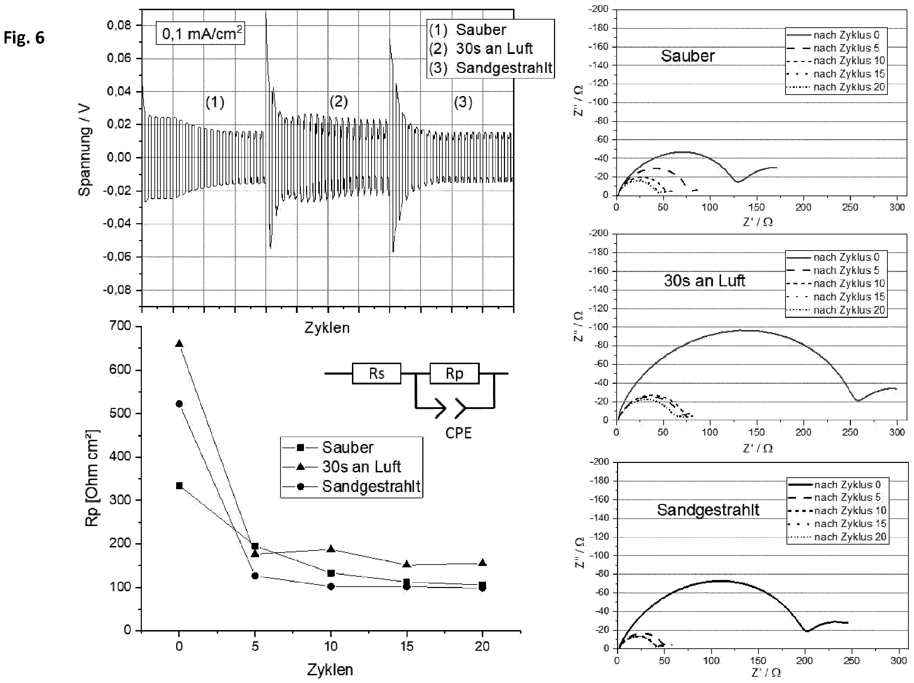

Fig. 6 zeigt in der Abbildung links oben einen Vergleich des Überpotentials der verschmutzen, der sauberen und der verschmutzten und anschließend mit dem erfindungsgemäßen Verfahren zur Oberflächenbehandlungen behandelten Elektroden in symmetrischen Zellen bei je 20 galvanostatischen Lade- und Entladezyklen mit 0,1 mAh/cm². Zudem zeigt Fig. 6 in der rechten Abbildung Impedanzspektren nach jedem fünften der in der Abbildung links oben dargestellten Zyklen. Ferner zeigt Fig. 6 in der Abbildung links unten eine Auftragung der Werte Rp, erhalten aus den mit dem angegebenen Ersatzschaltbild gefitteten Spektren der rechten Abbildung (zweiter Halbkreis wurde vernachlässigt).

Zur elektrochemischen Untersuchung der unterschiedlichen Lithium-Oberflächen wurden symmetrische EL-Cells gebaut und dabei sauberes Lithium aus der Glovebox, Lithium, welches 30s Luft ausgesetzt war, und Lithium, welches ebenfalls 30 s Luft ausgesetzt war und danach unter Argon sandgestrahlt wurde, verglichen. Die Rundelektroden mit 18 mm Durchmesser wurden nach dem Sandstrahlen aus dem Kupfer-Lithium-Laminat ausgestanzt. Als Separator wurde ein Whatman GF/F und als Elektrolyt 180 µL 1M Lithium bis(fluorosul-fonyl)amid in 1,2-Dimethoxyethan verwendet. Die Zellen (Zelltyp: EL-Cell) wurden 20 Mal bei einer Stromdichte von 0,1 mA/cm² galvanostatisch für je eine Stunde geladen und entladen und dabei das Überpotential aufgezeichnet (Fig. 6, oben links). Zu Beginn und nach jedem fünften Zyklus wurde zudem ein Impedanz Spektrum von 1 MHz bis 1 Hz aufgenommen (Fig. 6, rechts).

Die Elektroden, welche 30 s Raumluft ausgesetzt waren, zeigen ein höheres Überpotential, als die saubere Referenz, während die Zelle mit sandgestrahlten Elektroden ein der sauberen Referenz ähnliches Überpotential aufweist. Hierbei ist anzumerken, dass das Sandstrahlen bei den hier gemessenen Proben noch nicht in einer Glovebox durchgeführt werden konnte, sondern in einer mit Argon gefluteten Kunststoffbox. Es ist anzunehmen, dass in der Kunststoffbox keine reine Argon-Atmosphäre vorlag. Zusätzlich waren die sandgestrahlten Proben beim Einschleusen in die Glovebox für den darauffolgenden Zellbau wenige Sekunden Luft ausgesetzt. Folglich war zu erwarten, dass die gestrahlten Proben sich elektrochemisch ähnlich schlecht wie die Proben, die 30 s Raumluft ausgesetzt waren, verhalten. Beim Einbau der Elektroden in die Zellen, hatte sich die Lithium-Oberfläche schon leicht ins Schwarze verfärbt, ähnlich zu den Proben an Raumluft. Dass die gestrahlten Proben trotzdem ein geringeres Überpotential als die saubere Referenz aufweisen, wurde als überraschend positives Ergebnis eingestuft. Noch deutlich bessere Ergebnisse als die hier aufgeführten werden bei der Übertragung des gesamten Strahlprozesses in die Glovebox erreicht, wie in Fig. 1 gezeigt.

Die gemessenen Überpotentiale korrelieren mit den Ergebnissen der Impedanz-Spektroskopie. Die Beschaffenheit der Lithium-Oberfläche spielt insbesondere bei der Ausbildung der Elektroden- und Elektrolyt-spezifischen Grenzschicht (solid electrolyte interface) eine Rolle, was sich quantitativ im Radius des ersten Halbkreises der Impedanz-Spektren äußert. Dieser wurde mit dem in Fig. 6 aufgeführten Ersatzschaltbild gefittet und der Wert für Rp aufgetragen. Die an Luft ausgesetzte Probe weist im Schnitt die höchsten Widerstände auf. Der Widerstand Rp der sandgestrahlten Probe liegt vor Zyklisierung zwar noch über der der sauberen Referenz, nach fünfmaligem Laden und Entladen und allen weiteren Zyklen jedoch unter der der sauberen Referenz. Ursachen hierfür und das damit einhergehende niedrige Überpotential sind voraussichtlich sowohl die Reinigung der Oberfläche, als auch die vergrößerte Oberfläche der Elektrode wie in Fig. 4 gezeigt.

## Patentansprüche

1. Verfahren zur Oberflächenbehandlung von Metall-Substraten und Metalllegierungs-Substraten für eine negative Elektrode eines sekundären galvanischen Elements, bei welchem mindestens eine zu behandelnde Oberfläche mindestens eines Substrats aus einem Material ausgewählt aus der Gruppe bestehend aus Alkalimetallen, Erdalkalimetallen, Aluminium und Legierungen hiervon mit einem Strahlmittel bestrahlt wird, wobei das Strahlmittel in Richtung der zu behandelnden Oberfläche beschleunigt wird und auf die zu behandelnde Oberfläche aufprallt, und wobei durch das Aufprallen des Strahlmittels auf die zu behandelnde Oberfläche zumindest ein Teil der zu behandelnden Oberfläche abgetragen wird.

2. Verfahren gemäß dem vorhergehenden Anspruch, **dadurch gekennzeichnet, dass** durch das Abtragen des zumindest einen Teils der zu behandelnden Oberfläche eine Reinigung der zu behandelnden Oberfläche und/oder eine Strukturierung der zu behandelnden Oberfläche erfolgt.

3. Verfahren gemäß einem der vorhergehenden Ansprüche, **dadurch gekennzeichnet, dass** das Strahlmittel Partikel mit einer im Wesentlichen glatten Oberfläche und/oder mit einer im Wesentlichen runden Morphologie aufweisen.

4. Verfahren gemäß einem der vorhergehenden Ansprüche, **dadurch gekennzeichnet, dass** das Strahlmittel inerte Partikel umfasst oder aus diesen besteht, wobei die inerten Partikel vorzugsweise ausgewählt sind aus der Gruppe bestehend aus Korund-Partikeln, Glasperlen, Keramik-Perlen, Edelstahlgussperlen, und Mischungen hiervon.

5. Verfahren gemäß einem der vorhergehenden Ansprüche, **dadurch gekennzeichnet, dass** das Strahlmittel Funktionspartikel umfasst oder daraus besteht, wobei die Funktionspartikel jeweils einen Kern und eine um den Kern angeordnete Hülle, welche ein Funktionsmaterial umfasst, aufweisen, und wobei durch das Aufprallen des Strahlmittels auf die zu behandelnde Oberfläche zumindest ein Teil des Funktionsmaterials auf die zu behandelnde Oberfläche aufgetragen wird, wobei der zumindest eine Teil des Funktionsmaterials vorzugsweise als Schicht, besonders bevorzugt als Passivierungsschicht, auf die zu behandelnde Oberfläche aufgetragen wird.

6. Verfahren gemäß einem der vorhergehenden Ansprüche, **dadurch gekennzeichnet, dass** das Strahlmittel in Richtung der zu behandelnden Oberfläche mithilfe von Gasdruck beschleunigt wird, wobei der Gasdruck vorzugsweise in einem Bereich von 0,5 bar bis 20 bar, besonders bevorzugt in einem Bereich von 2 bar bis 10 bar, ganz besonders bevorzugt in einem Bereich von 3 bar bis 5 bar, liegt.

7. Verfahren gemäß einem der vorhergehenden Ansprüche, **dadurch gekennzeichnet, dass** der Winkel zwischen der Richtung, in welche das Strahlmittel beschleunigt wird, und der zu behandelnden Oberfläche in einem Bereich von 1° bis 45°, bevorzugt in einem Bereich von 2° bis 20°, besonders bevorzugt in einem Bereich von 5° bis 10°, liegt.

8. Verfahren gemäß einem der vorhergehenden Ansprüche, **dadurch gekennzeichnet, dass** die zu behandelnde Oberfläche für einen Zeitraum von 0,1 s bis 5 s, bevorzugt für einen Zeitraum von 0,2 s bis 3 s, besonders bevorzugt für einen Zeitraum von 0,5 s bis 1 s, mit dem Strahlmittel bestrahlt wird.

9. Verfahren gemäß einem der vorhergehenden Ansprüche, **dadurch gekennzeichnet, dass** das Bestrahlen der zu behandelnden Oberfläche mit dem Strahlmittel in einer Inertgasatmosphäre, vorzugsweise in einer Argon-Atmosphäre, erfolgt und/oder in einer Atmosphäre erfolgt, die einen H₂O-Gehalt aufweist, der kleiner als 5 ppm ist.

10. Verfahren gemäß einem der vorhergehenden Ansprüche, **dadurch gekennzeichnet, dass** unmittelbar im Anschluss an das Bestrahlen der zu behandelnden Oberfläche
- ein Aufbringen einer Funktionsschicht auf die behandelte Oberfläche erfolgt, wobei die Funktionsschicht vorzugsweise eine Polymerschicht, eine anorganische Schicht oder eine kohlenstoffhaltige Schicht ist,
- ein Zusammenfügen, vorzugsweise eine Lamination, des Substrats mit weiteren Komponenten des sekundären galvanischen Elements erfolgt, oder
- eine inerte Versiegelung der behandelten Oberfläche oder des Substrats erfolgt.

11. Verfahren gemäß einem der vorhergehenden Ansprüche, **dadurch gekennzeichnet, dass** das Substrat ein Alkalimetall-Substrat, vorzugsweise ein Lithium-Substrat, ist.

12. Verfahren gemäß einem der vorhergehenden Ansprüche, **dadurch gekennzeichnet, dass** das Substrat
- ein Film ist, welcher auf einer Trägerfolie, vorzugsweise einer polymeren Trägerfolie, angeordnet ist oder welcher auf keiner Trägerfolie angeordnet ist, oder
- eine Schicht eines Laminats aus
• einem ersten Metall, insbesondere Lithium, oder einer ersten Metalllegierung und
• mindestens einem weiteren Metall oder einer weiteren Metalllegierung ist,
wobei die Schicht vorzugsweise eine Lithium-Schicht eines Kupfer-Lithium-Laminats ist, oder
- ein Barren, vorzugsweise ein Lithium-Barren, ist.

13. Metall-Substrat oder Metalllegierungs-Substrat mit mindestens einer behandelten Oberfläche, welche mit einem Verfahren gemäß einem der vorhergehenden Ansprüche behandelt wurde.

14. Metall-Substrat oder Metalllegierungs-Substrat gemäß Anspruch 13, **dadurch gekennzeichnet, dass** auf der behandelten Oberfläche eine Passivierungsschicht angeordnet ist, die vorzugsweise aus einem Material besteht, welches ausgewählt ist aus der Gruppe bestehend aus
- organischen Verbindungen; bevorzugt cyclischen Carbonaten und Polycarbonaten, wie z.B. Fluoroethylencarbonat, Vinylencarbonat, Polyethylencarbonat; Polyethern, wie z.B. Polyethylenoxid; Blockcopolymeren; Silanen;
- anorganischen Verbindungen; bevorzugt Metalloxidverbindungen, Li₃PO₄, LiPON, LiNO₃, Al₂O₃,
- anorganisch-organischen Hybridpolymeren,
- anorganisch-organischen Verbundschichten, und
- Mischungen hiervon.

15. Sekundäres galvanisches Element umfassend eine negative Elektrode, eine positive Elektrode und einen Elektrolyten, wobei es sich bei der negativen Elektrode um ein Metall-Substrat oder Metalllegierungs-Substrat gemäß Anspruch 13 oder 14 handelt, und wobei das sekundäre galvanische Element vorzugsweise eine Lithium-Ionen-Batterie und/oder eine Festkörperbatterie ist.
